# EUROPEAN PATENT SPECIFICATION

(11) **EP 1 439 730 B1**
(45) Date of publication and mention of the grant of the patent: **17.12.2008**
(21) Application number: 02293226.3
(22) Date of filing: 23.12.2002
(51) Int. Cl.: H04Q 11/00, H04L 12/56

(54) **Congestion control in an optical burst switched network**
Überlastkontrolle in einem optischen Netzwerk mit Burstschaltung
Contrôle de congestion dans un réseau optique avec commutation en rafale

(43) Date of publication of application: 21.07.2004
(73) Proprietor: Alcatel Lucent, 75008 Paris (FR)
(72) Inventor: Poppe, Fabrice, 9000 Gent (BE); Petit, Guido Henri Marguerite, 2018 Antwerp (BE); Laevens, Koenraad Jozef Frederik Emmanuel, 8000 Brugge (BE)
(74) Representative: Narmon, Gisèle Marie Thérèse

(56) References cited:
- SE-YOON OH; HYUN HA HONG; MINHO KANG: " A data burst assembly algorithm in optical burst switching networks" ETRI JOURNAL, ELECTRON. &TELECOMMUN. RES. INST.,TAEJON, SOUTH KOREA , vol. 24, no. 4, August 2002 (2002-08), pages 311-322, XP002257124 ISSN: 1225-6463
- XIONG Y ET AL: "CONTROL ARCHITECTURE IN OPTICAL BURST-SWITCHED WDM NETWORKS" IEEE JOURNAL ON SELECTED AREAS IN COMMUNICATIONS, IEEE INC. NEW YORK, US, vol. 18, no. 10, October 2000 (2000-10), pages 1838-1851, XP000976892 ISSN: 0733-8716
- CHEN Y ET AL: "PROPORTIONAL QOS OVER OBS NETWORKS" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY: IEEE, US, vol. 3 OF 6, 25 November 2001 (2001-11-25), pages 1510-1514, XP001054831 ISBN: 0-7803-7206-9
- DATABASE IETF REQUEST FOR COMMENTS [Online] IETF; RFC2309, March 1998 (1998-03) B. BRADEN ET AL: "Recommendations on Queue Management and Congestion Avoidance in the Internet" retrieved from WWW.IETF.ORG/RFC Database accession no. RFC2309 XP002240554

## Description

The present invention relates to a method to control traffic congestion in an optical burst switched network, as described in the preamble of claim 1, to a core router of an optical burst switched network, as described in the preamble of claim 4.

The article entitles "Control Architecture in Optical Burst-Switched WDM Networks", published in the IEEE journal on selected areas in communication, vol. 18, No. 10, of October 2000, describes the basic concept of Optical Burst Switching (OBS) and presents a general architecture of a core router in an OBS network.

The rapid growth of the Internet is driving the demand for higher transmission capacity and high speed Internet Protocol (IP) routers at an unprecedented rate. Further, the advent of Dense Wavelength Division Multiplexing (D-WDM) technology, in which a single optical fiber is used to transmit several communication channels simultaneously, with each channel utilizing a different wavelength of light, has allowed a major increase in the transmission capacity of optical fibers.

To circumvent potential bottlenecks of electronic processing at such high speed, data packets having the same network egress address and some common attributes, like Quality of Service (QoS) requirements, are assembled into data bursts and forwarded through the network as a single entity.

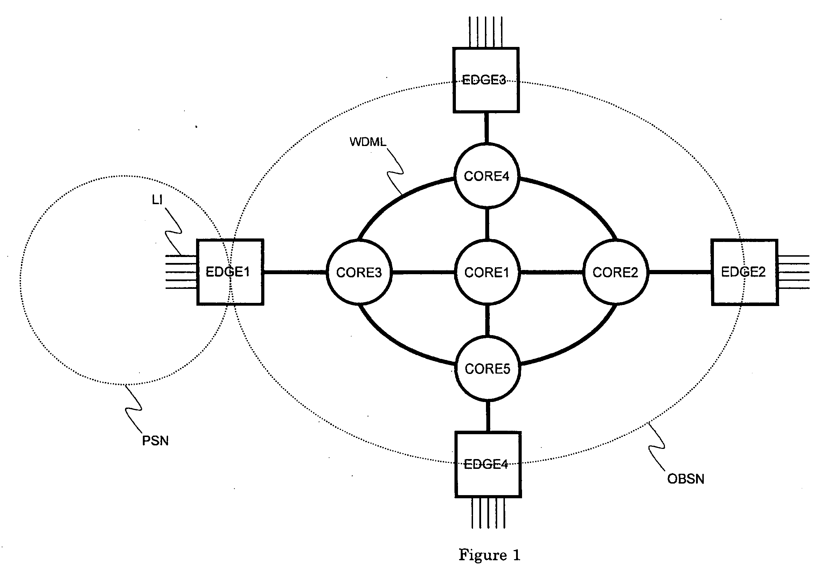

A block diagram of an OBS network OBSN is shown in fig. 1, which consists of optical core routers CORE1 to CORES and electronic edge routers EDGE1 to EDGE4, connected by WDM links WDML. Packets are assembled into data bursts at a network ingress, which are then routed through the OBS network OBSN and disassembled back into packets at a network egress. Edge routers EDGE1 to EDGE4 provide burst assembly/disassembly function and support for legacy interface LI.

Along with a data burst, a Burst Header Packet (BHP) is transmitted slightly ahead in time on a distinct wavelength/channel. A BHP contains the necessary information for guiding a data burst through the OBS network. BHP are processed by electronic control devices, while the actual data bursts are kept intact while being switched, i.e. are flying-through without optical/electrical conversion. An OBS network can thus be envisioned as two coupled overlay networks, a pure optical network transferring data bursts, and a hybrid control network transferring BHPs.

Contention on egress channels is resolved by means of Fiber Delay Lines (FDL), which delay a data burst by a fixed amount of time until an egress channel is available. Upon receipt of a BHP from an ingress control channel, the core router first reads the time stamp and the data burst duration information to determine when the corresponding data burst will enter the core router and how long the data burst will last. It then searches for an idle egress data channel out of all the egress data channels bound to the right destination, making potential use of the FDLs to resolve a contention, if any. The core router next schedules a BHP on an egress control channel and configures just in time the optical switching matrix to let the data burst pass through. The configuration information includes interalia incoming data channel identifier, outgoing data channel identifier, time to switch the data burst, duration of the data burst, and the FDL buffer identifier.

As far as congestion is addressed, the aforementioned article only mentions that if a data burst is to be scheduled beyond a maximum realizable delay, which is the delay of the longest FDL, then the data burst is simply discarded.

Dropping data bursts in this way has some important drawbacks, which are reminded in the Request For Comment (RFC) 2309 entitled 'Recommendation on Queue Management and Congestion Avoidance in the Internet', published by the Internet Engineering Task Force's (IETF) in April 1998. Noticeably, the Transmission Control Protocol (TCP) flows will apply upon packet loss a congestion avoidance mechanism, which causes TCP flows to back off during congestion. A well known problem with this control mechanism is that TCP sources tend to synchronize, resulting in an oscillatory behavior around equilibrium, and in deteriorating performances (lowered link utilization reducing the overall throughput). The above mentioned RFC describes a recommended mechanism for queue management called Random Early Detection (RED). In contrast to traditional queue management algorithms, which drop packets only when the buffer is full, the RED algorithm drops packets probabilistically. The probability of drop increases as the estimated average queue size grows.

However, no queue as such exists in the optical domain, and hence the implementation of the RED algorithm, which is based on queue length, is not straightforward for a person skilled in the art.

It is an object of the present invention to provide a method to control congestion in an OBS network so as to avoid the aforementioned drawbacks.

According to the present invention, this object is achieved by the method defined in claim 1 and by the core router defined in claim 4.

An average delay is computed over a set of delays that have been determined for a set of data bursts prior to transmission of said set of data burst to a next hop.

The way the delays have been determined is outside the scope of the invention. The scheduler may either simply look at the channel's unscheduled time or channel's scheduling horizon, which is the time from which no more data burst is scheduled, or may further attempt to fill in the gaps caused by the delay granularity of the FDLs.

Averaging the delays allows the core routers to absorb short bursty traffic without any bursts being dropped. The choice of the averaging function is left open. The averaging function could be an arithmetical averaging, with or without weighting, or any other alternative as known to the skilled person. Said set of data bursts may be reduced to a single element so as averaging is of no value.

Next, said average delay is further used to decide whether a data burst has to be actively dropped to guard against an expected network congestion. Said average delay is compared with respect to a pre-determined threshold. If said average delay is lower than said pre-determined threshold then said data burst is scheduled for transmission as usual. If said average delay is greater than said pre-determined threshold, yet lower than a maximum realizable delay, then said data burst is dropped with a non-null probability.

'Drop with a non-null probability' means that the dropping decision is the realization of a random experiment or a pseudo-random experiment with 2 possible outcomes: said data burst is dropped or said data burst is scheduled for transmission. The probability that said data burst is dropped is a non-null number p, 0 < p ≤ 1, hence the probability that said data burst is scheduled for transmission is 1 - p.

Any 2 state generating function, which relative frequency are respectively p and 1 - p, is perfectly suited as well.

The relationship between said set of data bursts and said data burst is not explicitly mentioned, since it can be manifold. Said data burst may be part of said set of data bursts or may not. In the former case, one has to determine first a delay that shall be applied to said data burst, next to include this delay in said average delay, before the dropping decision for said data burst is made.

Another characterizing embodiment of the present invention is defined in the claims 3 and 6. The decision whether to drop said data burst further depends on whether or not said data burst includes data packets belonging to traffic flows that are responsive to congestion signal, that is to say traffic flows applying some congestion avoidance algorithm when congestion is detected.

An example interalia of such a traffic flow is a TCP flow applying the congestion avoidance algorithm as specified in the RFC 1122 of October 1989. However, the present invention is not limited thereto.

A congestion signal is a signal through which a source detects congestion in a network and acts thereupon, such as packet loss. It could be as well any other signal type as known to the skilled person. One may envision as an example a network sending congestion indication back to the source when congestion is expected to occur.

The advantage of this solution over the previous one is to avoid dropping a data burst that does not include congestion responsive traffic, which is a wasted effort.

Further characterizing embodiments of the present invention are mentioned in the appended claims.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
- fig. 2 represents a block diagram of a core router,
- fig. 3 represents a block diagram of a switch control unit of a core router,
- fig. 4 represents a scheduling of 4 data bursts versus their arrival time,
- fig. 5 represents a dropping probability versus an average delay.

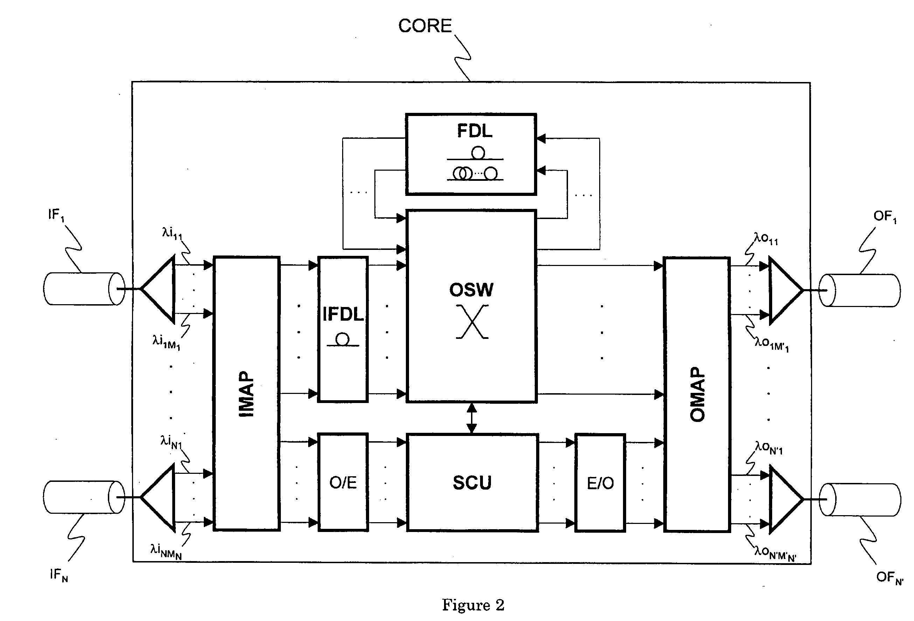

A block diagram of a core router CORE is depicted in fig. 2. The core router CORE comprises the following functional blocks:
- an optical switching matrix OSW, which consists of a wavelength/space switching fabric,
- a switch control unit SCU, in charge of processing the BHPs and configuring the optical switching matrix OSW accordingly,
- fiber delay lines FDL, each fiber deal line being a multiple of a delay unit DU,
- input fiber delay lines IFDL, providing for a compensating time budget for the processing latency of the BHPs in the switch control unit SCU,
- channel adaptation units IMAP and OMAP, providing adaptation function between the inter-node transmission domain and the intra-node channel domain,
- optical/electrical converters O/E and electrical/optical converters E/O.

The core router CORE is capable of switching any data burst from any data channel of any input fiber IF₁ to IF_{N} to any data channel of any output fiber OF₁ to OF_{N'}.

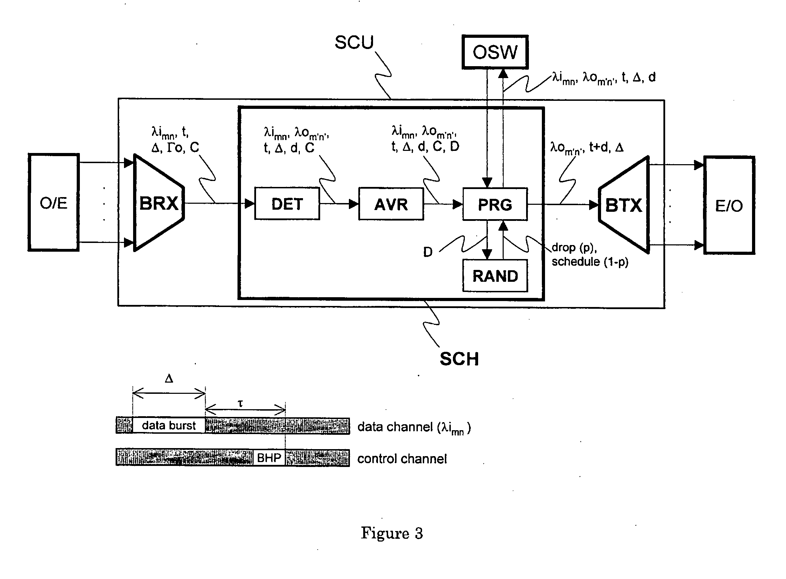

Further details of the switch control unit SCU, wherein the present invention resides, are depicted in fig. 3. The switch control unit SCU comprises:
- a BHP receiving means BRX,
- a scheduling means SCH,
- a BHP transmitting means BTX.

The scheduling means SCH further comprises:
- a determining means DET,
- an averaging means AVR,
- a programming means PRG,
- a two-state random generator RAND.

The BHP receiving means BRX, the determining means DET, the averaging means AVR, the programming means PGR and the BHP transmitting means BTX are serially coupled to each other, as depicted in fig. 3. The programming means PRG are coupled to the random generator RAND and to the optical switching matrix OSW.

The BHP receiving means BRX mostly performs Layer 1 (L1) and Layer 2 (L2) de-capsulation.

Upon receipt of a BHP from an ingress control channel, the BHP receiving means BRX extracts the necessary data for guiding the associated data burst through the optical switching matrix OSW. These data are:
- the identity of an ingress data channel λiₘₙ (m and n being indexes in the correct range) conveying the data burst,
- the offset time τ between the BHP and the associated data burst,
- the duration Δ of the data burst,
- the destination address of the data burst in the OBS network.

The BHP receiving means BRX further extracts from the BHP an indication C whether or not the associated data burst includes congestion responsive traffic.

The BHP receiving means BRX determines the BHP arrival time and computes therefrom the arrival time t of the associated data burst to the optical switching matrix OSW, which is the sum of the BHP arrival time, the offset time τ, and the delay of the input fiber delay lines IFDL.

The BHP receiving means BRX performs a forwarding table lookup in order to determine a group of egress data channels Γo whereto forward the data burst.

The BHP receiving means BRX passes the following items of information to the scheduling means SCH:
- the identity of the ingress data channel λiₘₙ,
- the arrival time t and the duration Δ of the data burst,
- the group of egress data channels Γo whereto forward the data burst,
- the indication C whether or not the data burst includes congestion responsive traffic.

The scheduling means SCH is responsible for both the scheduling the switch of a data burst on an egress data channel and the scheduling the transmission of its associated BHP on an egress control channel.

The determining means DET determines both an egress data channel λo_{m'n'} out of the group of egress data channels Γo, and a delay d to be applied to the data burst on this channel. The delay d is expressed as a multiple of the delay unit DU. The delay d may be null.

The preferred scheduling algorithm is the Latest Available Unused Channel with Void Filling (LAUC-VF) algorithm. Refer to the aforementioned article for further details about this algorithm. It is apparent to a person skilled in the art that the present invention is not limited to this algorithm.

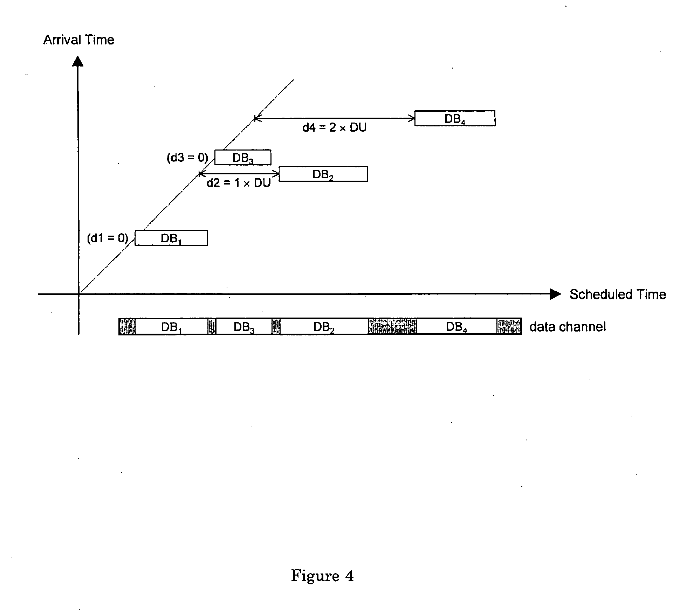

As an example, a scheduling of 4 data bursts DB₁ to DB₄ versus their arrival time is plotted in fig. 4. The data burst DB₁ can be scheduled without any additional delay (d1 = 0). The data burst DB₂ has to be delayed by 1 delay unit (d2 = 1 × DU) since the egress data channel is busy at the time the data burst DB₂ enters the optical switching matrix OSW. The data burst DB₃ need not be delayed (d3 = 0) since it is short enough to fit the gap between the data bursts DB₁ and DB₂. The data burst DB₄ is delayed by 2 delay units (d4 = 2 × DU).

If the delay d is greater than a maximum realizable delay Dmax, which is the longest delay of the fiber delay lines FDL then the data burst is discarded and the scheduling process stops without further processing.

The averaging means AVR stores the so-determined delay d at an appropriate location for further retrieval. The preferred embodiment of the present invention makes use of cyclic buffers. A read pointer and a write pointer index each cyclic buffer. The read pointer delimits the beginning of the averaging window, the length of the averaging window being preliminary known. The write pointer points to the location whereto the next delay will be stored. Both pointers increment when a new delay is stored and wrap around when the buffer boundary is reached. It is apparent for a person skilled in the art that there are various ways of storing the delays, and of structuring and indexing the storage areas.

In the preferred embodiment of the present invention, averaging is performed over a number of data bursts that have been scheduled on the same data channel group, and thus there are as many cyclic buffers as there are data channel groups.

An arithmetical averaging without weighting is preferred for this embodiment.

The averaging means AVR computes an average delay D for the channel group associated with the egress data channel λo_{m'n'} and passes the so-computed delay to the programming means PRG.

If C indicates that the data burst includes congestion responsive traffic then the programming means PRG invokes the two-state random generator RAND, with as input the average delay D. The random generator RAND returns a decision whether or not the data burst shall be dropped, based on a probability law that is a function of the average delay D.

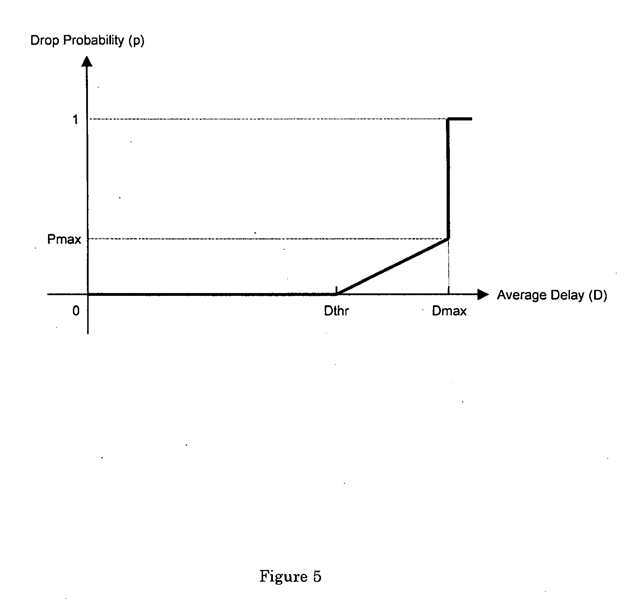

An instance interalia of such a probability law is plotted in fig. 5. If the average delay D is lower than a threshold Dthr then the random generator RAND always returns '*schedule*' as decision. If the average delay D is greater than the threshold Dthr, yet lower than the maximum realizable delay Dmax, the random generator RAND either returns '*schedule*' or '*drop*' as decision.

The probability law as plotted in fig. 5 can be achieved by making use of a *rand*() sub-routine, which returns a uniformly distributed random number comprised between 0 and 1. Then, by comparing the returned random number with a threshold, which equals the desired probability, one gets the dropping decision. Other embodiments of a 2 state random generator can be though off.

If the data burst is allowed to be scheduled, then the programming means PRG passes the following items of information to the optical switching matrix OSW:
- the identities of the ingress data channel λiₘₙ and the egress data channel λo_{m'm'},
- the arrival time t and the duration Δ of the data burst,
- the delay d that shall be applied to the data burst.
An optical path with the required characteristics will be programmed just in time through the optical switching matrix OSW to let the data burst passed through.

The data burst departure time, which is the sum of the arrival time t and the delay d, together with the identity of the egress data channel λo_{m'm'}, are passed to the BHP transmitting means BTX.

The BHP transmitting means BTX builds up a BHP and transmits this BHP on an egress control channel associated with the egress data channel λo_{m'm'}. This BHP gets an ideal offset τ₀ with its associated data burst for compensating for delay and processing latency variation.

In an alternative embodiment of the present invention, no averaging is done and the delay d that has been determined by the determining means DET for the data burst is used as such by the programming means PRG to invoke the random generator RAND and to decide whether or not the data burst is to be dropped.

In an alternative embodiment of the present invention, the averaging means computes ahead in time the average delay D, so as when a new data burst comes in, the average delay D is made immediately available to the programming means PRG for the dropping decision. This is only realizable provided that the delay d that has been determined for the new data burst does not form part of the average delay D. By so doing, one avoid introducing additional processing latency because of the averaging, which may be rather a consuming process.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method to control traffic congestion in an optical burst switched network (OBSN),
said method comprising the step of determining a delay that shall be applied to each of a set of data bursts prior to transmission of said set of data bursts to a next hop, thereby determining a set of delays,
**characterized in that** said method further comprises the steps of:
- determining an average delay (D) over said set of delays
- dropping a data burst with a non-null probability (p) if said average delay is greater than a pre-determined threshold (Dthr) and lower than a maximum realizable delay (Dmax).

2. A method according to claim 1, **characterized in that** said set of data bursts includes at least said data burst.

3. A method according to claim 1, **characterized in that** said method further comprises the step of dropping said data burst with said non-null probability if said data burst further includes data packets belonging to traffic flows that are responsive to congestion signals.

4. A core router (CORE) of an optical burst switched network, said core router comprising scheduling means (SCH) adapted to determine a delay that shall be applied to each of a set of data bursts prior to transmission of said set of data bursts to a next hop, thereby determining a set of delays,
**characterized in that** said scheduling means is further adapted to:
- determine an average delay (D) over said set of delays,
- drop a data burst with a non-null probability (p) if said average delay is greater than a pre-determined threshold (Dthr) and lower than a maximum realizable delay (Dmax).

5. A core router according to claim 4, **characterized in that** said set of data bursts includes at least said data burst.

6. A core router according to claim 4, **characterized in that** said scheduling means is further adapted to drop said data burst with said non-null probability if said data burst further includes data packets belonging to traffic flows that are responsive to congestion signals.

## Patentansprüche

1. Ein Verfahren zur Verkehrsüberlastkontrolle in einem optischen Netzwerk mit Burstschaltung (OBSN),
wobei das Verfahren den Schritt des Bestimmens einer Verzögerung umfaßt, die auf jeden Satz der Datenbursts vor der Übertragung des Satzes der Datenbursts an den nächsten Hop anzuwenden ist, wodurch ein Satz von Verzögerungen bestimmt wird,
**dadurch gekennzeichnet, daß** das Verfahren außerdem die Schritte umfaßt:
- Bestimmen der durchschnittlichen Verzögerung (D) über den Satz der Verzögerungen,
- Verwerfen eines Datenbursts mit einer von Null verschiedenen Wahrscheinlichkeit (p), wenn die durchschnittliche Verzögerung größer als ein vorgegebener Schwellenwert (Dthr) und kleiner als eine maximale realisierbare Verzögerung (Dmax) ist.

2. Ein Verfahren nach Anspruch 1, **dadurch gekennzeichnet, daß** der Satz der Datenbursts mindesten einen Datenburst enthält.

3. Ein Verfahren nach Anspruch 1, **dadurch gekennzeichnet, daß** das Verfahren außerdem den Schritt des Verwerfens des Datenbursts mit der von Null verschiedenen Wahrscheinlichkeit umfaßt, wenn der Datenburst außerdem Datenpakete enthält, die zu Verkehrsflüssen gehören, die auf Überlastungssignale empfindlich sind.

4. Ein Core-Router (CORE) eines optischen Netzwerks mit Burstschaltung, wobei der Core-Router Schedulingmittel (SCH) umfaßt, die angepaßt sind, um eine Verzögerung zu bestimmen, die auf jeden Burst eines Satzes von Datenbursts vor der Übertragung des Satzes der Datenbursts an einen nächsten Hop anzuwenden ist, wodurch ein Satz von Verzögerungen bestimmt wird,
**dadurch gekennzeichnet, daß** die Schedulingmittel außerdem angepaßt sind, um
- eine durchschnittliche Verzögerung (D) des Satzes der Verzögerungen zu bestimmen,
- einen Datenburst mit einer von Null verschiedenen Wahrscheinlichkeit (p) zu verwerfen, wenn die durchschnittliche Verzögerung größer als ein vorgegebener Schwellenwert (Dthr) und kleiner als eine maximale realisierbare Verzögerung (Dmax) ist.

5. Ein Core-Router nach Anspruch 4, **dadurch gekennzeichnet, daß** der Satz der Datenbursts mindestens einen Datenburst enthält.

6. Ein Core-Router nach Anspruch 4, **dadurch gekennzeichnet, daß** die Schedulingmittel außerdem angepaßt sind, um den Datenburst mit einer von Null verschiedenen Wahrscheinlichkeit zu verwerfen, wenn der Datenburst außerdem Datenpakete enthält, die zu Verkehrsflüssen gehören, die auf Überlastungssignale empfindlich sind.

## Revendications

1. Procédé de régulation de l'encombrement du trafic dans un réseau optique à commutation de salves (OBSN), ledit procédé comprenant l'étape de détermination d'un retard qui doit être appliqué à chacune des salves de données d'un ensemble avant la transmission dudit ensemble de salves de données vers un saut suivant, ce qui détermine ainsi une série de retards, **caractérisé en ce que** ledit procédé comprend en plus les étapes suivantes :
- détermination d'un retard moyen (D) sur ledit ensemble de retard
- suppression d'une salve de données ayant une probabilité non nulle (p) si ledit retard moyen est supérieur à un seuil prédétermine (Dthr) et inférieur à un retard maximum réalisable (Dmax).

2. Procédé selon la revendication 1, **caractérisé en ce que** ledit ensemble de salves de données comprend au moins ladite salve de données.

3. Procédé selon la revendication 1, **caractérisé en ce que** ledit procédé comprend en plus l'étape de suppression de ladite salve de données ayant une probabilité non nulle si ladite salve de données comprend en plus des paquets de données appartenant à des flux de trafic qui sont en réponse à des signaux d'encombrement.

4. Routeur de noyau (CORE) d'un un réseau optique à commutation de salves, ledit routeur de noyau comprenant un moyen d'ordonnancement (SCH) conçu pour déterminer un retard qui doit être appliqué à chacune des salves de données d'un ensemble avant la transmission dudit ensemble de salves de données vers un saut suivant, ce qui détermine ainsi une série de retards, **caractérisé en ce que** ledit moyen d'ordonnancement est en plus conçu pour :
- déterminer un retard moyen (D) sur ledit ensemble de retard
- supprimer une salve de données ayant une probabilité non nulle (p) si ledit retard moyen est supérieur à un seuil prédétermine (Dthr) et inférieur à un retard maximum réalisable (Dmax).

5. Routeur de noyau selon la revendication 4, **caractérisé en ce que** ledit ensemble de salves de données comprend au moins ladite salve de données.

6. Routeur de noyau selon la revendication 4, **caractérisé en ce que** ledit moyen d'ordonnancement est en plus conçu pour supprimer ladite salve de données ayant une probabilité non nulle si ladite salve de données comprend en plus des paquets de données appartenant à des flux de trafic qui sont en réponse à des signaux d'encombrement.
